# EUROPÄISCHE PATENTSCHRIFT

(11) **EP 4 425 106 B1**
(45) Veröffentlichungstag und Bekanntmachung des Hinweises auf die Patenterteilung: **17.06.2026**
(21) Anmeldenummer: 24158411.9
(22) Anmeldetag: 19.02.2024
(51) Int. Cl.: G01D 5/244

(54) **POSITIONSBESTIMMUNGSVORRICHTUNG UND POSITIONSBESTIMMUNGSSYSTEM SOWIE HERSTELLUNGSVERFAHREN HIERFÜR**
POSITION DETERMINING DEVICE AND POSITION DETERMINING SYSTEM AND METHOD FOR PRODUCING SAME
DISPOSITIF DE DÉTERMINATION DE POSITION ET SYSTÈME DE DÉTERMINATION DE POSITION ET PROCÉDÉ DE FABRICATION ASSOCIÉ

(30) Priorität: 28.02.2023 DE 102023104840
(43) Veröffentlichungstag der Anmeldung: 04.09.2024
(73) Patentinhaber: SICK AG, 79183 Waldkirch (DE)
(72) Erfinder: Tabler, Eduard, 78050 Villingen-Schwenningen (DE); Hopp, David, 78166 Donaueschingen (DE)
(74) Vertreter: Manitz Finsterwald Patent- und Rechtsanwaltspartnerschaft mbB

(56) Entgegenhaltungen:
- EP-B1- 1 672 770
- WO-A1-2015/180763
- WO-A1-2022/099344
- DE-A1- 102014 118 041
- US-A1- 2017 184 425

## Beschreibung

Die vorliegende Offenbarung betrifft eine Positionsbestimmungsvorrichtung, ein Positionsbestimmungssystem umfassend eine solche Positionsbestimmungsvorrichtung sowie ein Herstellungsverfahren für eine Positionsbestimmungsvorrichtung und für ein Positionsbestimmungssystem.

Ein Rotor und ein Stator werden zueinander drehbar angeordnet. Der Rotor kann mit einem Motor verbunden werden, sodass eine Rotation einer Motorwelle eine Rotation des Rotors bewirkt wird. Die Rotation des Rotors relativ zu dem Stator kann durch eine Auswertungseinrichtung erfasst und ausgewertet werden und so eine Position, insbesondere eine Rotationsposition des Rotors und somit auch der Motorwelle, erfasst werden.

Der Rotor und der Stator bilden zusammen eine Positionsbestimmungsvorrichtung, die insbesondere auch als Bausatz bereitgestellt werden kann und derart ausgebildet sein kann, dass sie an eine Vielzahl von verschiedenen Motoren bzw. Motorwellen angebaut werden kann.

Üblicherweise ist der Rotor an dem Stator nicht gelagert. Deshalb wird der Rotor typischerweise mit der Motorwelle verbunden und der Stator an einem festsitzenden Teil des Motors, wie beispielsweise einem Motorblatt befestigt.

Herkömmlicherweise werden Rotor und Stator häufig separat geliefert und müssen dann mit Montagewerkzeugen zusammengesetzt werden. Hierbei kommt es immer wieder zu Beschädigungen der Bauteile im Inneren des Stators. Zudem können Toleranzen nicht eingehalten werden oder sogar Verwechslungen auftreten, sodass z.B. nicht passende Kombinationen von Rotor und Stator montiert werden. Aus der Druckschrift WO 2022 / 099 344 A1 ist beispielsweise ein Verfahren zum Einbau einer Axialflussmaschine bekannt. Die Druckschrift DE 10 2014 118 041 A1 offenbart einen Drehgeber und ein Verfahren zu dessen Montage an einer Baugruppe.

Es ist eine Aufgabe der vorliegenden Offenbarung, eine verbesserte Positionsbestimmungsvorrichtung mit einem Rotor und einem Stator, ein verbessertes Positionsbestimmungssystem sowie ein verbessertes Herstellungsverfahren für eine Positionsbestimmungsvorrichtung und für ein Positionsbestimmungssystem anzugeben.

Diese Aufgabe wird gelöst durch den Gegenstand der unabhängigen Ansprüche.

Hierzu wird zunächst gemäß einem ersten Aspekt eine Positionsbestimmungsvorrichtung bereitgestellt, umfassend einen Rotor, der einen Maßverkörperungsabschnitt aufweist, der magnetisch ausgebildet ist, wobei der Maßverkörperungsabschnitt eine Maßverkörperung ausbildet, die geeignet ist, von einer Auswertungseinrichtung erfasst zu werden, um eine Rotationposition des Rotors um eine Rotationsachse in Bezug zu einem Stator zu ermitteln und die einen Stator umfasst, der ein Gehäuse aufweist, das einen Hohlraum ausbildet, in dem der Rotor zumindest teilweise aufgenommen ist, wobei der Stator zumindest abschnittsweise aus einem ferromagnetischen Material ausgebildet ist, wobei der Rotor und der Stator derart zueinander angeordnet sind und zusammenzuwirken, dass durch Magnetkraft eine Verschiebung des Rotors zu dem Stator in axialer Richtung der Rotationsachse begünstigt und in entgegengesetzter axialer Richtung erschwert wird.

Anders ausgedrückt, wird der Rotor also durch die Magnetkraft zu dem Stator hingezogen, insbesondere bis der Rotor z.B. an einem Teil des Stators anliegt. Durch die Anziehung der Magnetkraft wird die Verschiebung des Rotors in axialer Richtung begünstigt, eine Verschiebung entgegen der Magnetkraft, d.h. in entgegengesetzter axialer Richtung wird aber erschwert.

Insbesondere ist der Stator aufgrund seiner zumindest abschnittsweisen ferromagnetischen Eigenschaft derart ausgebildet, dass der magnetisch ausgebildete Maßverkörperungsabschnitt des Rotors eine Anziehungskraft auf den Stator ausübt oder von dem Stator angezogen wird, oder andersherum.

Erfindungsgemäß hat sich herausgestellt, dass das üblicherweise relativ starke Magnetfeld der Maßverkörperung dazu genutzt werden kann, den Rotor z.B. während des Transports an dem Stator mittels Magnetkraft zu befestigen und so gegen unerwünschte Drehungen und Verschiebungen relativ zum Stator zu schützen.

Wenn der Rotor so durch Magnetkraft am Stator befestigt ist, ist eine weitere Verschiebung des Rotors in der axialen Richtung nicht mehr möglich.

Durch diese Lösung lässt sich der Rotor besonders einfach und sicher an dem Stator anordnen und insbesondere befestigen, da durch die Magnetkraft eine Befestigung "automatisch" erfolgt. Insbesondere wird so eine Verschiebung und/oder Bewegung des Rotors gegenüber dem Stator verhindert. Hierdurch kann ein besonders sicherer Transport erfolgen und es werden Beschädigungen am Rotor und/oder Stator verhindert.

Wie später noch genauer ausgeführt, kann der Rotor z.B. vor der Montage der Positionsbestimmungsvorrichtung im Stator zusätzlich mittels eines Befestigungsabschnitts befestigt sein.

Gemäß der Erfindung wird der Rotor durch die Magnetkraft der Maßverkörperung in einer Position bzw. einem Zustand gehalten, welcher auch als Transportzustand bezeichnet wird. Wird die Positionsbestimmungsvorrichtung dann an einem Motor montiert, kann der Rotor mit einer Motorwelle verbunden werden, wodurch die Motorwelle den Rotor bevorzugt gegen die Magnetkraft der Maßverkörperung drückt, sich der Rotor entlang seiner Drehachse axial verschiebt und hierdurch insbesondere die Befestigung gelöst wird. Damit wird der Rotor mit der Motorwelle drehbar und die Positionsbestimmungsvorrichtung befindet sich dann in ihrem Betriebszustand.

Die Montage der Positionsbestimmungsvorrichtung an einem Motor ist mit wenigen Handgriffen und insbesondere ohne besonderes Werkzeug durchführbar. Von Vorteil ist dabei, dass - wie später noch genauer erläutert - durch das Montieren der Positionsbestimmungsvorrichtung an dem Motor der Rotor automatisch entgegen der Magnetkraft in die entgegengesetzte axiale Richtung gedrückt wird, wodurch die Befestigung des Rotors am Stator gelöst wird. Eine werksseitig vorhandene korrekte Ausrichtung von Rotor und Stator kann somit auch beim Transport und danach beibehalten werden.

Die Maßverkörperung kann insbesondere eine ringförmig um eine Achse des Rotors angeordnete Vielzahl von magnetischen Polpaaren, d.h. Magneten, insbesondere Permanentmagneten, umfassen. Die Maßverkörperung kann von einem oder mehreren Magnetsensoren, z.B. Hall-Sensoren, ausgelesen werden, um eine Drehung des Rotors relativ zum Stator zu erfassen. Bei der Positionserfassungsvorrichtung kann es sich also um einen Encoder handeln. Die erfasste Drehung kann z.B. als Positions- und/oder Drehgeschwindigkeitssignal ausgegeben werden.

Durch die Erfindung wird eine Montagehilfe und insbesondere eine Ausrichtungshilfe bereitgestellt, die eine Befestigung des Rotors und/oder des Stators an einem Motor vereinfacht.

Gemäß einer Ausführungsform liegt der Rotor, insbesondere in dem Transportzustand, an einer Fläche des Stators an, wobei der Rotor durch die Magnetkraft an die Fläche des Stators gedrückt wird, um ein Drehen des Stators relativ zum Rotor zu erschweren. Bei der Fläche, an welche der Rotor gedrückt wird, kann es sich beispielsweise um eine Stirnwandung des Stators handeln. Insbesondere wird die Maßverkörperung direkt an die Stirnwandung gedrückt. Alternativ oder zusätzlich kann die Fläche auch in den Hohlraum des Stators hineinragende Anlageabschnitte umfassen.

Durch das Andrücken des Rotors an den Stator kann, insbesondere durch Kraftschluss, beispielsweise nur durch Kraftschluss, eine Bewegung des Rotors relativ zum Stator verhindert werden.

In einer Ausführungsform ist der Rotor, zum Überführen der Positionsbestimmungsvorrichtung in einen Betriebszustand, entgegen der Magnetkraft von der Fläche des Stators wegbewegbar ausgebildet, wodurch (nach dem Wegbewegen von der Fläche des Stators) ein Drehen des Stators relativ zum Rotor ermöglicht wird. Um die Positionsbestimmungsvorrichtung in den Betriebszustand zu überführen, kann der Rotor in entgegengesetzter axialer Richtung gegen die Magnetkraft bewegt werden, wobei sich die Verbindung zwischen Rotor und Stator löst. Der Rotor kann dann frei gegenüber dem Stator drehen, wie dies für den Betrieb der Positionsbestimmungsvorrichtung notwendig ist.

Gemäß der Erfindung weist der Rotor einen Befestigungsabschnitt auf und der Stator weist eine Ausnehmung auf, wobei der Befestigungsabschnitt und die Ausnehmung eine zueinander korrespondierende Form aufweisen.

Gemäß der Erfindung sind der Befestigungsabschnitt und die Ausnehmung derart zueinander angeordnet und ausgebildet, mit miteinander einen Form- und/oder - nicht von der Erfindung abgedeckt - einen Kraftschluss zu erzeugen.

Weiter sind der Befestigungsabschnitt und die Ausnehmung derart ausgebildet, dass eine Rotation des Rotors in Bezug auf den Stator verhindert wird, insbesondere dann, wenn der Befestigungsabschnitt zumindest teilweise, insbesondere vollständig in der Ausnehmung aufgenommen wurde.

Dies kann durch den Eingriff des Befestigungsabschnitts des Rotors mit der dazu korrespondierenden Ausnehmung des Stators erfolgen.

Ebenso insbesondere wird eine Verschiebung des Rotors in Bezug auf den Stator entgegengesetzt zur axialen Richtung erschwert, wenn der Befestigungsabschnitt zumindest teilweise, insbesondere vollständig, in der Ausnehmung aufgenommen wurde.

Insbesondere sind der Stator und der Rotor, insbesondere die dadurch aufeinander ausgeübte Magnetkraft, derart dimensioniert, dass eine Befestigung in axialer Richtung dann maximal ist, wenn der Befestigungsabschnitt vollständig in der Ausnehmung aufgenommen wurde.

Durch diese Ausführungsformen wird ein besonders sicherer Sitz und Eingriff des Rotors gegenüber dem Stator ermöglicht.

In einer Ausführungsform weist der Befestigungsabschnitt einen in radialer Richtung polygonförmigen Querschnitt aufweist. Insbesondere kann der Querschnitt drei-, vier-, fünf-, sechs-, sieben- oder achteckig ausgebildet sein oder zumindest bereichsweise eine solche Form aufweisen. Alternativ kann der Querschnitt auch eine asymmetrische, insbesondere Freiform sein.

Durch diese Ausführungsform wird ein besonders guter Eingriff zwischen dem Rotor und dem Stator ermöglicht.

In einer Ausführungsform weist der polygonförmige Querschnitt abgerundete Ecken auf.

Durch diese Ausführungsform wird ein besonders leichter Eingriff des Befestigungsabschnitts mit der Ausnehmung des Rotors ermöglich.

In einer Ausführungsform weist der Befestigungsabschnitt in radialer Richtung einen kleineren Durchmesser als der Maßverkörperungsabschnitt auf.

Durch diese Ausführungsform wird eine axiale Verschiebung, insbesondere des Maßverkörperungsabschnitts in Richtung der Ausnehmung verhindert bzw. blockiert.

In einer Ausführungsform ist ein Zentrierungsabschnitt an dem Rotor vorgesehen, der ausgebildet ist, mit einer Motorwelle verbunden zu werden und bei einer Rotation der Motorwelle eine Rotation des Rotors um die Rotationsachse zu bewirken. Insbesondere ist der Zentrierungsabschnitt entlang der axialen Richtung konisch geformt.

Hierdurch, insbesondere durch die konische Form, wird eine Befestigung und insbesondere Zentrierung des Rotors an der Motorwelle begünstigt.

In einer Ausführungsform weist der Zentrierungsabschnitt eine zu einer Ausnehmung der Motorwelle korrespondierende Form auf.

Durch diese Ausführungsform wird zum einen ein Einführen des Zentrierungsabschnitts begünstigt und zum anderen das Einführen auch begrenzt, sodass sich eine definierte Position, insbesondere Endposition, des Zentrierungsabschnitts und damit des Rotors zu der Motorwelle ergibt.

In einer Ausführungsform ist der Rotor derart zu dem Stator angeordnet und ausgebildet, dass bei einem Befestigen der Positionsbestimmungsvorrichtung an einem Motor die Magnetkraft überwunden wird.

In einer Ausführungsform ist der Rotor derart zu dem Stator angeordnet und ausgebildet, dass durch Überwinden der Magnetkraft der Rotor in entgegengesetzter axialer Richtung verschoben wird.

In einer Ausführungsform ist der Rotor derart zu dem Stator angeordnet und ausgebildet, dass durch Überwinden der Magnetkraft der Befestigungsabschnitt aus der Ausnehmung gelöst wird.

In einer Ausführungsform ist der Rotor derart zu dem Stator angeordnet und ausgebildet, dass durch Lösen des Befestigungsabschnitts aus der Ausnehmung eine Rotation des Rotors um die Rotationsachse ermöglicht wird.

Insbesondere können der Rotor und der Stator derart zueinander angeordnet sein, dass der zuvor ermöglichte Eingriff des Befestigungsabschnitts in die Ausnehmung und die damit verbundene Rotationsbefestigung sowie auch die durch die Magnetkraft ermöglichte axiale Befestigung durch ein Befestigen, insbesondere mithilfe von einem oder mehreren Befestigungsmitteln, gleichzeitig gelöst werden.

Hierdurch kann insbesondere der Rotor in Bezug zu dem Stator, insbesondere innerhalb des Gehäuses, in entgegengesetzter axialer Richtung verschoben werden, sodass sich diese Befestigungen lösen. Hierdurch wird dann eine Rotation des Rotors gegenüber dem Stator ermöglicht.

Es wird somit eine Positionsbestimmungsvorrichtung angegeben, die zunächst für einen sicheren Transport eine Bewegung des Rotors zu dem Stator, sowohl in axialer als auch radialer Richtung sowie ebenso eine Rotation zueinander, verhindert, den Rotor zu dem Stator also sicher befestigt, und diese Befestigung mit einfachen Mitteln nach Montage der Positionsbestimmungsvorrichtung an einem Motor wieder gelöst werden kann, wodurch eine Rotation des Rotors mit dem Motor ermöglicht und gleichzeitig eine genaue und präzise Erfassung der Rotationsposition des Rotors in Bezug auf den Stator ermöglicht wird.

Es wird gemäß einem weiteren Aspekt ebenso ein Positionsbestimmungssystem bereitgestellt, das eine Positionsbestimmungsvorrichtung, insbesondere eine Positionsbestimmungsvorrichtung nach einer zuvor beschriebenen Ausführungsform, sowie einen Motor umfasst. Die Positionsbestimmungsvorrichtung kann dabei einen Rotor mit einem Zentrierungsabschnitt aufweisen, der ausgebildet ist, von einer Motorwelle des Motors aufgenommen zu werden und bei einer Rotation der Motorwelle eine Rotation des Rotors um eine Rotationsachse zu bewirken.

Gemäß einem weiteren Aspekt wird ein Herstellungsverfahren für eine Positionsbestimmungsvorrichtung bereitgestellt, insbesondere ein Herstellungsverfahren für eine Ausführungsform einer zuvor beschriebenen Positionsbestimmungsvorrichtung. Das Herstellungsverfahren umfasst dabei die Schritte Bereitstellen eines Rotors, Bereitstellen eines Stators, und Einführen des Rotors in einen Hohlraum des Stators sodass der Rotor und der Stator derart zusammenzuwirken, dass durch Magnetkraft eine Verschiebung des Rotors zu dem Stator in axialer Richtung einer Rotationsachse des Rotors begünstigt und in entgegengesetzter axialer Richtung erschwert wird

Insbesondere kann durch das Einführen des Rotors in den Hohlraum des Stators er Befestigungsabschnitt des Rotors in der Ausnehmung des Stators aufgenommen werden und damit eingreifen.

Gemäß einem weiteren Aspekt wird ein Herstellungsverfahren für ein Positionsbestimmungssystem bereitgestellt, insbesondere ein Herstellungsverfahren für eine Ausführungsform eines zuvor beschriebenen Positionsbestimmungssystems. Das Herstellungsverfahren umfasst dabei die Schritte Bereitstellen einer Positionsbestimmungsvorrichtung, insbesondere einer Positionsbestimmungsvorrichtung nach einer zuvor beschriebenen Ausführungsform, weiter insbesondere wie durch eine Ausführungsform eines Verfahren zur Herstellung einer Positionsbestimmungsvorrichtung hergestellt, Bereitstellen eines Motors und Anordnen der Positionsbestimmungsvorrichtung an dem Motor, sodass die Magnetkraft überwunden wird.

Insbesondere kann durch das Anordnen der Positionsbestimmungsvorrichtung auch ein Befestigungsabschnitt eines Rotors der Positionsbestimmungsvorrichtung aus einer Ausnehmung eines Stators der Positionsbestimmungsvorrichtung gelöst werden.

Es wird auch ein Rotor angegeben. Insbesondere kann der Rotor derart ausgebildet sein, dass er einen Maßverkörperungsabschnitt aufweist, der magnetisch ausgebildet ist, wobei der Maßverkörperungsabschnitt eine Maßverkörperung ausbildet, die ausgebildet ist, von einer Auswertungseinrichtung erfasst zu werden, um eine Rotationposition des Rotors um eine Rotationsachse in Bezug zu einem Stator zu ermitteln. Dabei kann der Rotor insbesondere derart ausgebildet sein, dass er mit einem Stator derart zusammenwirkt, dass durch Magnetkraft eine Verschiebung des Rotors zu dem Stator in axialer Richtung der Rotationsachse begünstigt und in entgegengesetzter axialer Richtung erschwert wird.

Alternativ oder zusätzlich kann der Rotor ausgebildet sein, dass er einen Maßverkörperungsabschnitt aufweist, der eine Maßverkörperung ausbildet, die ausgebildet ist, von einer Auswertungseinrichtung der Positionsbestimmungsvorrichtung erfasst zu werden, um eine Rotationsposition des Rotors in Bezug zu einem Stator zu ermitteln, und einen Befestigungsabschnitt aufweist, der in axialer Richtung zwischen dem Zentrierungsabschnitt und dem Maßverkörperungsabschnitt angeordnet ist und der eine zu einer Ausnehmung des Stators korrespondierende Form aufweist. Der Rotor kann auch einen Zentrierungsabschnitt aufweisen, der ausgebildet ist, mit einer Motorwelle verbunden zu werden und bei einer Rotation der Motorwelle eine Rotation des Rotors um eine Rotationsachse zu bewirken.

Es wird ebenfalls ein Stator angegeben. Insbesondere kann der Stator derart ausgebildet sein, dass er ein Gehäuse aufweist, das einen Hohlraum ausbildet in dem ein Rotor zumindest teilweise aufgenommen werden kann, wobei der Stator, insbesondere zumindest ein Teil einer Stirnwand des Stators, die das Gehäuse zu einer Seite hin abschließt, zumindest abschnittsweise aus einem ferromagnetischen Material ausgebildet ist, und wobei der Rotor und der Stator derart zusammenzuwirken, dass durch Magnetkraft eine Verschiebung des Rotors zu dem Stator in axialer Richtung einer Rotationsachse des Rotors begünstigt und in entgegengesetzter axialer Richtung erschwert wird.

Alternativ oder zusätzlich kann der Stator ausgebildet sein, dass er ein Gehäuse umfasst, das eine Stirnwand aufweist, mit dem es ein in axialer Richtung zu einer Seite offenen Hohlraum ausbildet. Das Gehäuse ist dabei ausgebildet, einen Rotor aufzunehmen, insbesondere einen Rotor nach einem der zuvor beschriebenen Ausführungsformen. Die Stirnwand weist eine Ausnehmung auf, die eine zu einem Befestigungsabschnitt des Rotors korrespondierende Form aufweist.

Bezüglich der Ausführungsformen des Rotors und/oder des Stators und deren Vorteile wird auf die oben beschriebenen Ausführungsformen der Positionsbestimmungsvorrichtung verwiesen.

Ausführungsformen eines Stators, eines Rotors, einer Positionsbestimmungsvorrichtung, eines Positionsbestimmungssystems, eines Herstellungsverfahrens für eine Positionsbestimmungsvorrichtung und eines Herstellungsverfahrens für ein Positionsbestimmungssystem werden nun im Zusammenhang mit den folgenden Figuren im Detail erläutert. Es zeigen:
- Fig. 1: zeigt eine perspektivische Ansicht einer Ausführungsform eines Rotors;
- Fig. 2: zeigt eine perspektivische Ansicht einer Ausführungsform eines Stators;
- Fig. 3: zeigt eine perspektivische Ansicht einer Ausführungsform einer Positionsbestimmungsvorrichtung;
- Fig. 4: zeigt eine perspektivische Schnittansicht einer Ausführungsform einer Positionsbestimmungsvorrichtung;
- Fig. 5: zeigt eine Schnittansicht einer Ausführungsform eines Positionsbestimmungssystems;
- Fig. 6: zeigt eine perspektivische Schnittansicht einer Ausführungsform einer Positionsbestimmungsvorrichtung; und
- Fig. 7: zeigt ein Ablaufdiagramm einer Ausführungsform eines Herstellungsverfahrens für eine Positionsbestimmungsvorrichtung und ein Positionsbestimmungssystem.

Dabei bezeichnen gleiche Bezugszeichen in den Figuren gleiche oder ähnliche Merkmale.

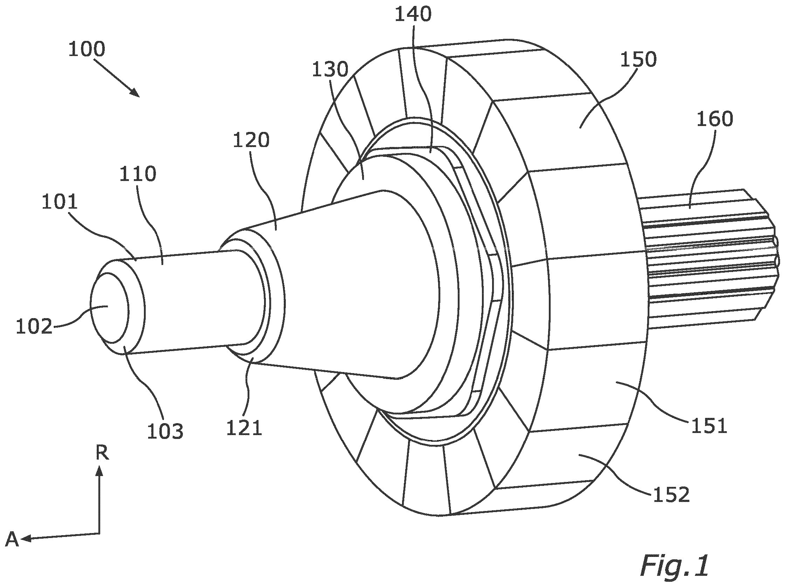

Fig. 1 zeigt eine perspektivische Ansicht eines Rotors 100 gemäß einer Ausführungsform. Der Rotor 100 weist eine zentrale Rotationsachse 101 auf, die sich entlang einer axialen Richtung des Rotors 100 erstreckt und um die der Rotor 100 drehbar ist bzw. sich drehen kann. Der Rotor 100 weist dabei in axialer Richtung A einen ersten Abschnitt 110 auf, in dem der Rotor 100 bzw. die Rotationsachse 101 einen im Wesentlichen kreisförmigen Querschnitt in radialer Richtung R aufweist und der einen ersten Radius bzw. einer ersten Dicke in radialer Richtung R aufweist. Der erste Abschnitt 110 ist dabei insbesondre zylinderförmig entlang der axialen Richtung A ausgebildet und umfasst an der Stirnseite 102 eine Anfasung 103. Der erste Abschnitt 110 kann insbesondere ein zumindest Abschnittsweise, insbesondere im Bereich der Stirnseite, umlaufendes Gewinde aufweisen, das aus Gründen der Übersichtlichkeit nicht gezeigt ist.

Daran schließt sich ein zweiter Abschnitt 120 des Rotors 100 an, der auch als Zentrierungsabschnitt 120 bezeichnet werden kann. Der zweite Abschnitt weist einen im Wesentlichen konisch ausgebildeten Querschnitt auf und verbreitert sich entgegen der axialen Richtung A von einem zweiten Radius, der größer ist als der erste Radius, zu einem dritten Radius, der größer ist als der zweite Radius. Der zweite Abschnitt 120 ist im Wesentlichen konisch entlang der axialen Richtung A ausgebildet und umfasst an einem Übergang zum ersten Abschnitt 110 ebenfalls eine Anfasung 121. Der zweite Abschnitt 120 ist im Wesentlichen gleich oder ähnlich lang in axialer Richtung A wie der erste Abschnitt 110 ausgebildet.

Hieran schließt sich ein dritter Abschnitt 130 des Rotors 100 an, der erneut im Wesentlichen, insbesondere konstant, mit einem kreisförmigen Querschnitt in radialer Richtung R ausgebildet ist und einen vierten Radius aufweist, der größer ist als der dritte Radius. Auch der dritte Abschnitt 130 ist im Wesentlichen zylinderförmig entlang der axialen Richtung A ausgebildet. Der dritte Abschnitt 130 ist in axialer Richtung A kürzer, insbesondere um ein Vielfaches kürzer als der erste Abschnitt 110 und der zweite Abschnitt 120 ausgebildet.

Daran schließt sich ein vierter Abschnitt 140 an, der auch als Befestigungsabschnitt 140 bezeichnet werden kann. Der vierte Abschnitt 140 weist, abweichend von den vorherigen Abschnitten, keinen im Wesentlichen, zumindest abschnittsweise, zylinderförmigen Querschnitt radialer Richtung R auf. Der vierte Abschnitt 140 ist dabei in axialer Richtung A kürzer als der erste Abschnitt 110, der zweite Abschnitt 120 und der dritte Abschnitt 130 ausgebildet. Insbesondere ist der vierte Abschnitt 140 in etwa halb so lang in axialer Richtung A wie der dritte Abschnitt 130 ausgebildet.

Der vierte Abschnitt 140 ist dabei korrespondierend zu einer im Zusammenhang mit den folgenden Figuren gezeigten Ausnehmung eines Stators ausgebildet und ist konfiguriert, damit zusammenzuwirken, insbesondere einen Formschluss zu bewirken, wie im weiteren Verlauf noch erläutert werden wird.

Beispielhaft ist der vierte Abschnitt 140 vorliegend als im Wesentlichen mit einem in radialer Richtung R sechseckigen Querschnitt ausgebildet, insbesondere mit abgerundeten Ecken. Es versteht sich aber, dass jede andere Form, insbesondere jede andere Form mit Ausnahme eines kreisförmigen Querschnitts geeignet ist, die Funktion des vierten Abschnitts 140 zu erfüllen, wie im Zusammenhang mit den folgenden Figuren ebenfalls erläutert werden wird.

Beispielsweise kann der vierte Abschnitt 140 auch einen in radialer Richtung R dreieckigen, viereckigen, fünfeckigen, siebeneckigen, achteckigen oder neuneckigen Querschnitt aufweisen. Insbesondere kann der vierte Abschnitt 140 im Querschnitt als ein beliebiges, insbesondere rotationssymmetrisches Polygon und/oder regelmäßiges, insbesondere konvex-regelmäßiges, Polygon ausgebildet sein. Alternativ kann der vierte Abschnitt 140 auch einen asymmetrischen Querschnitt, insbesondere einen beliebigen Freiform-Querschnitt aufweisen. Der vierte Abschnitt 140 muss lediglich derart ausgebildet sein, dass er mit einem dazu korrespondieren Abschnitt eines Stators zusammenwirken kann und einen Formschluss und/oder Kraftschluss herstellen kann, insbesondere derart, dass bei dem Formschluss und/oder Kraftschluss eine Rotation des Rotors 100 um die Rotationsachse 101 verhindert wird.

Der vierte Abschnitt 140 weist dabei einen Durchmesser auf, der zumindest abschnittsweise größer ist, als der Durchmesser des dritten Abschnitts 130. Insbesondere ist der Durchmesser des vierten Abschnitts 140 im Bereich einer oder mehrere der Ecken des Sechsecks größer als der Durchmesser des dritten Abschnitts 130 und weist im Bereich der die Ecken verbindenden Strecken, insbesondere an deren Mittelpunkt, einen nur geringfügig größeren, insbesondere gleich großen, Radius wie der dritte Abschnitt 130 auf.

Der vierte Abschnitt 140 springt sowohl in axialer bzw. entgegengesetzt axialer Richtung A als auch in radialer Richtung R von dem Rotor 100 vor und hebt sich von dem angrenzenden dritten Abschnitt 130 und auch von dem in entgegengesetzter Richtung angrenzenden fünften Abschnitt 150 in radialer Richtung R und in axialer Richtung A ab. Der vierte Abschnitt 140 kann daher auch allgemein als Vorsprung 140 bezeichnet werden.

Der fünfte Abschnitt 150, der auch als Maßverkörperungsabschnitt 150 bezeichnet werden kann, weist erneut einen in radialer Richtung R kreisförmigen Querschnitt auf und ist in axialer Richtung zylinderförmig ausgebildet. Dabei ist der fünfte Abschnitt 150 in axialer Richtung A länger als der dritte Abschnitt 130 und der vierte Abschnitt 140 und kürzer als der erste Abschnitt 110 und der zweite Abschnitt 120 ausgebildet. Der fünfte Abschnitt 150 weist dabei eine Maßverkörperung auf, durch die der Rotor 100 im Zusammenwirken mit einer geeigneten Auswertungseinrichtung ausgebildet ist, eine Position, insbesondere eine Rotationsposition zu erkennen bzw. das Erkennen zu ermöglichen.

Die Maßverkörperung ist in dem gezeigten Beispiel magnetisch bzw. magnetisiert ausgebildet und weist dazu sich abwechselnde Segmente auf, von denen lediglich ein erstes Segment 151 und ein zweites Segment 152 mit einem Bezugszeichen versehen sind, und die voneinander verschieden magnetisiert sind, insbesondere entgegengesetzt magnetisiert ausgebildet sind. Insbesondere ist die Maßverkörperung als Ringmagnet mit mehreren Polpaaren ausgebildet. Diese Maßverkörperung kann von einer Ausleseeinrichtung berührungslos ausgelesen werden.

Der fünfte Abschnitt 150 weist darüber hinaus eine weitere Funktion auf. Insbesondere ist der fünfte Abschnitt 150 ausgebildet mit einem Stator derart zusammenzuwirken, dass er in einer Montageposition des Rotors bzw. der Positionsbestimmungsvorrichtung eine Verschiebung in axialer Richtung A begünstigt und in einer der Montageposition eine Verschiebung entgegen der axialen Richtung A erschwert, wie dies ebenfalls im Zusammenhang mit den folgenden Figuren beschrieben werden wird.

An den fünften Abschnitt 150 schließt sich ein sechster Abschnitt 160 an. Dieser ist im Querschnitt in radialer Richtung R im Wesentlichen kreisförmig mit alternierenden Vertiefungen und Erhebungen ausgebildet. Mit anderen Worten ist der sechste Abschnitt 160 im Querschnitt im Wesentlichen zahnradförmig ausgebildet. Diese Zahnradform dient zur Interaktion mit weiteren Komponenten des Stators, wie in den folgenden Figuren ebenfalls beschrieben werden wird.

Der Rotor 100 ist dabei, ggf. mit Ausnahme der Maßverkörperung, einstückig und/oder integral ausgebildet. Insbesondere kann der Rotor 100 ohne eine zentrale Befestigungsschraube und ohne eine entlang der Rotationsachse verlaufende Durchgangsbohrung, wie dies im Stand der Technik üblich ist, ausgeführt werden. Hierdurch ist eine besonders kostengünstige Herstellung möglich.

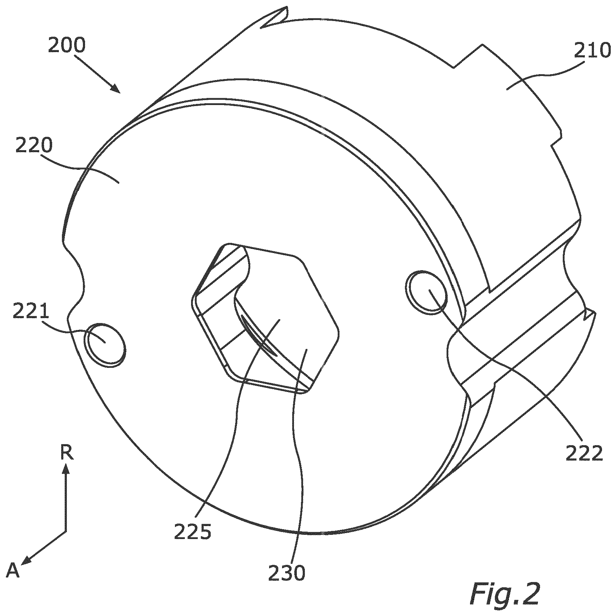

Fig. 2 zeigt eine perspektivische Ansicht einer Ausführungsform eines Stators 200. Der Stator 200 weist ein Gehäuse 210 auf, das eine zunächst offene, in axialer Richtung A hintere Seite und eine durch eine Stirnwand 220 geschlossene, in axialer Richtung A vordere Seite umfasst. Der Stator 200 ist in seiner Außenform im Wesentlichen zylinderförmig ausgebildet und bildet einen Hohlraum 230 aus.

Die Stirnwand 220 weist in axialer Richtung A eine Ausnehmung 225 auf. Die Ausnehmung 225 ist dabei korrespondierend zu dem Vorsprung bzw. dem vierten Abschnitt 140 des Rotors 100, wie in Fig. 1 erläutert, geformt und ausgebildet, diesen Vorsprung aufzunehmen und damit einen Formschluss zu erzeugen, wie dies weiter im Zusammenhang mit den folgenden Figuren erläutert werden wird. Die Ausnehmung 225 ist dabei ebenfalls als Sechseck, insbesondere mit abgerundeten Ecken ausgebildet. Die Ausnehmung 225 weist dabei zu dem Vorsprung 140 korrespondiere Maße auf, insbesondere solche, die einen Formschluss mit dem Vorsprung 140 ermöglichen.

Darüber hinaus weist der Stator 200 zwei Befestigungsmitteldurchführungen 221 und 222 auf, durch die jeweils ein Befestigungsmittel geführt werden kann und deren weitergehende Funktionen ebenfalls im Zusammenhang mit den folgenden Figuren erläutert werden wird.

Der Stator 200, insbesondere Teile des Gehäuses 210, weiter insbesondere ein Teil der Stirnwand 220 ist dabei zumindest abschnittsweise aus einem ferromagnetischen und/oder magnetisch leitendem Material gefertigt bzw. ausgebildet, wie beispielsweise einem Metall, insbesondere Stahl, Eisen, Nickel und/oder Kobalt. Insbesondere ist das Gehäuse 210 bzw. die Stirnwand 220 oder zumindest Teile hiervon aus einem magnetisierbaren Material ausgebildet.

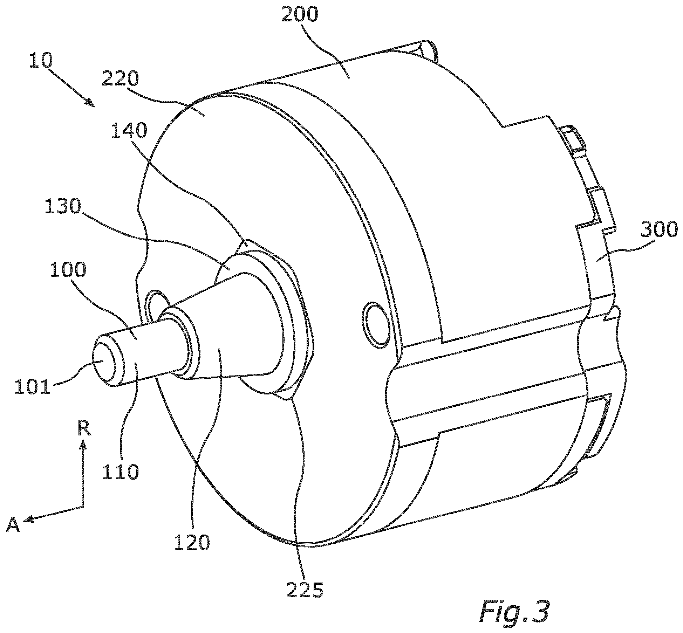

Fig. 3 zeigt eine perspektivische Ansicht einer Ausführungsform einer Positionsbestimmungsvorrichtung 10. Die Positionsbestimmungsvorrichtung 10 wird im Wesentlichen durch den im Zusammenhang mit Fig. 1 beschriebenen Rotor 100 und den im Zusammenhang mit Fig. 2 beschriebenen Stator 200 gebildet.

Dazu wurde der Rotor 100 derart durch das in axialer Richtung A hintere Ende des Stators 200 in den Hohlraum 210 eingeführt und durch die Ausnehmung 225 an der Stirnwand 220 teilweise wieder hinaus, sodass der erste Abschnitt 110, der zweite Abschnitt 120 und der dritte Abschnitt 130 des Rotors 100 vollständig aus der Ausnehmung 225 in axialer Richtung A herausragen.

Der vierte Abschnitt 140 bzw. der Vorsprung des Rotors 100 wird dabei derart in die Ausnehmung 225 eingeführt und darin aufgenommen, dass sich ein Formschluss und insbesondere ein Kraftschluss in radialer Richtung R ausbildet, der eine Rotation der Rotors 100 um die Rotationsachse 101 verhindert.

Darüber hinaus wird durch das Zusammenwirken der magnetischen bzw. magnetisierten Maßverkörperung bzw. des fünften Abschnitts 150 und der magnetischen Stirnwand 220 auch eine Befestigung in axialer Richtung A bewirkt, sodass sich zwischen dem fünften Abschnitt 150 des Rotors und der Innenseite der Stirnwand ein Kraftschluss ausbildet. Der Rotor 100 ist somit zunächst nicht in radialer Richtung A und nicht oder nur durch Aufwendung einer Kraft in axialer Richtung A bewegbar.

Darüber hinaus ist in Fig. 3 ein Verschlussdeckel 300 gezeigt, der ebenfalls mit dem Rotor 100 und dem Stator 200 zusammenwirkt, wie dies im Zusammenhang mit den folgenden Figuren noch näher erläutert werden wird.

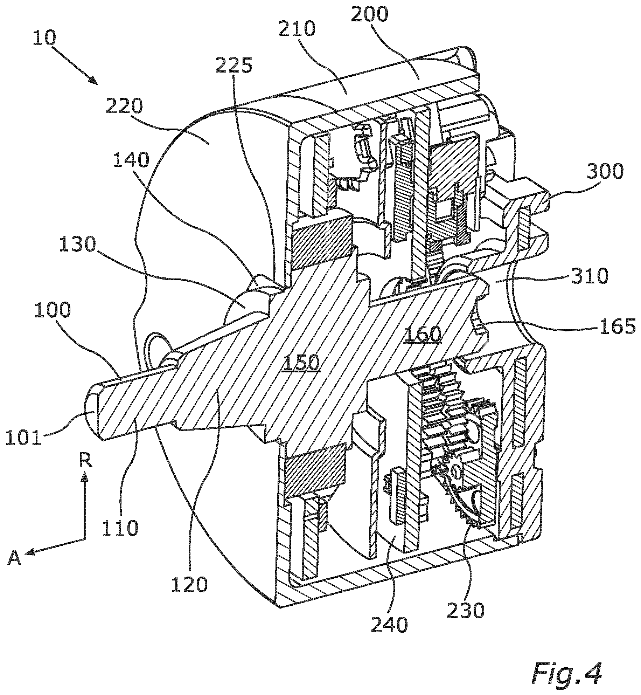

Fig. 4 zeigt eine perspektivische Schnittansicht einer Ausführungsform einer Positionsbestimmungsvorrichtung 10. Dabei ist in dieser Fig. 4 die Positionierung des Rotors 100 innerhalb des Stators 200 zu erkennen. Der Rotor 100 ist dabei derart in den Stator 200 eingeführt, dass der Vorsprung bzw. der vierte Abschnitt 140 des Rotors vollständig in der Ausnehmung 225 aufgenommen ist. Dazu weist der vierte Abschnitt 140 eine in axialer Richtung A im Wesentlichen gleich große Ausdehnung auf wie die Stirnwand 220 des Stators 200.

Mit anderen Worten ist der Vorsprung im Wesentlichen genauso lang bzw. springt im Wesentlichen genauso weit von dem fünften Abschnitt 150 vor, wie die Stärke bzw. Wanddicke der Stirnwand 220 ausgebildet ist. Die in axialer Richtung A vordere Wand des fünften Abschnitts 150 des Rotors 100 stößt dabei unmittelbar an die Innenwand der Stirnwand 220 des Stators 200 an, was durch den Magnetismus des Stators 200 bzw. der Stirnwand 220 und des Rotors 100 bzw. der Maßverkörperung begünstigt und erzeugt wird.

Ebenfalls zu sehen in Fig. 4 ist die Wirkung des Verschlussdeckels 300. Dieser hat zum einen die Funktion den Stator 200 an einer in axialer Richtung hinteren Seite zumindest teilweise zu verschließen, insbesondere nachdem der Rotor 100 zumindest teilweise darin aufgenommen wurde. Zum anderen bewirkt eine Aufnahme 310 in dem Verschlussdeckel 300 zunächst eine Führung und Zentrierung des Rotors 100 und insbesondere des sechsten Abschnitts 160, der darin zumindest teilweise aufgenommen wird.

Auch gezeigt in Fig. 4 sind Elemente die einer Auswertungseinrichtung zugeordnet sind bzw. davon umfasst sind, und die in dem Hohlraum 210 des Stators 200 aufgenommen werden. Die Auswertungseinrichtung, von der aus Gründen der Übersichtlichkeit lediglich eine Platine 240 mit einem Bezugszeichen versehen ist, ist ausgebildet, eine Position, insbesondere eine Rotationsposition des Rotors 100 in Bezugs auf den Stator 200 um die Rotationsachse 101 zu erkennen bzw. das Erkennen zu ermöglichen. Insbesondere können Elemente der Auswertungseinrichtung in den Hohlraum 230 eingeführt werden, nachdem der Rotor 100 eingeführt und bevor der Verschlussdeckel 300 angebracht wurde. Die Elemente der Auswertungseinrichtung können dabei dem Stator 200 zugeordnet bzw. davon umfasst sein, oder davon verschieden ausgebildet sein.

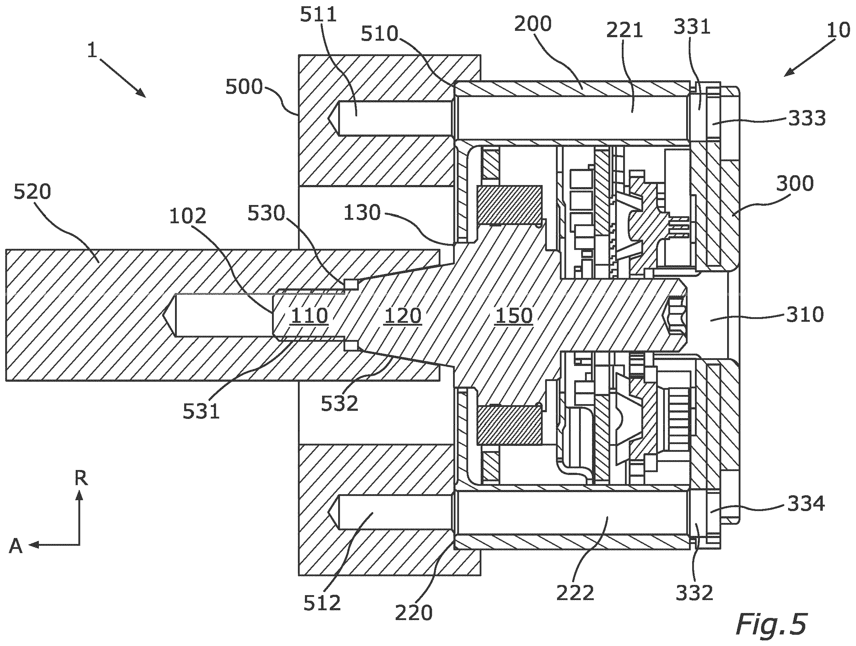

Ebenso gezeigt in Fig. 4 ist eine Werkzeugaufnahme 165, die in dem in axialer Richtung A hinteren Ende des Rotors 100 ausgebildet ist. Die Werkzeugaufnahme 165 ist dabei ausgebildet, ein Werkzeug aufzunehmen, um den Rotor 100 an einem Motor, insbesondere einer Motorwelle, wie dies im Zusammenhang mit der folgenden Fig. 5 erläutert werden wird, zu befestigen. Beispielhaft ist die Werkzeugaufnahme 165 hier als Innensechskant gezeigt.

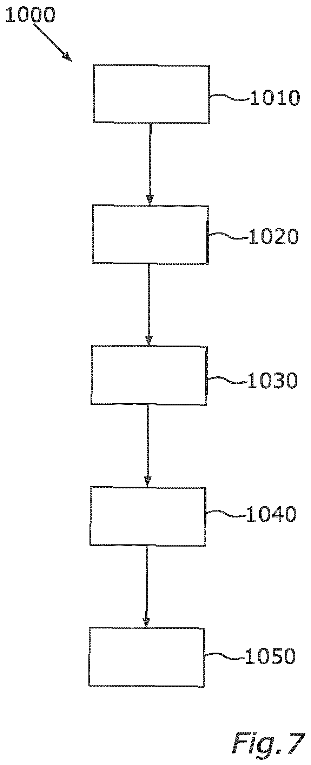

Die in Fig. 4 gezeigte Positionsbestimmungsvorrichtung 10 entspricht dabei dem im Zusammenhang mit Fig. 7 beschriebenen Zustand nach dem Verfahrensschritt 1030. Der Zustand bzw. die Position, in der sich der Rotor 100 zu dem Stator 200 befindet, kann auch als Montagezustand bzw. Montageposition bezeichnet werden.

Fig. 5 zeigt eine Schnittansicht einer Ausführungsform eines Positionsbestimmungssystems 1. Das Positionsbestimmungssystem 1 wird im Wesentlichen durch die Positionsbestimmungsvorrichtung 10, wie in Fig. 3 und 4 gezeigt, und einen Motor 500 gebildet. Die Positionsbestimmungsvorrichtung 10 bzw. die Stirnwand 220 des Stators 200 ist dabei an einem Motorblatt 510 des Motors angeordnet und war derart, dass der Rotor 100 bzw. der erste Abschnitt 110 und der zweite Abschnitt 120 in eine Ausnehmung 530 einer Motorwelle 520 aufgenommen wird.

Die Ausnehmung 530 ist dabei korrespondierend zu dem ersten Abschnitt 110 und/oder dem zweiten Abschnitt 120 des Rotors geformt und ausgebildet, diese beiden Abschnitte in axialer Richtung A darin aufzunehmen. Insbesondere weist die Ausnehmung 530 einen ersten Abschnitt 531 auf, der im Wesentlichen zylinderförmig ausgebildet ist, korrespondierend zu dem ersten Abschnitt 110 des Rotors 100, und einen zweiten Abschnitt 532, der im Wesentlichen konisch geformt ist, korrespondierend zu dem zweiten Abschnitt 120 des Rotors 100.

Insbesondere weist der erste Abschnitt 531 der Ausnehmung 530 einen Innendurchmesser auf, der im Wesentlichen einem Außendurchmesser des ersten Abschnitts 110 des Rotors entspricht und der zweite Abschnitt 532 weist einen Verjüngungswinkel oder Verjüngungsgrad auf, der im Wesentlichen dem Verjüngungswinkel oder Verjüngungsgrad des zweiten Abschnitts 120 des Rotors entspricht. Ebenso weist der erste Abschnitt 531 der Ausnehmung 530 eine Länge in axialer Richtung A auf, die im Wesentlichen einer Länge des ersten Abschnitts 110 des Rotors 100 entspricht und der zweite Abschnitt 532 der Ausnehmung 530 weist eine Länge in axialer Richtung A auf, die im Wesentlichen einer Länge des zweiten Abschnitts 120 des Rotors 100 entspricht. Der erste Abschnitt 531 der Ausnehmung kann darüber hinaus auch ein zu dem ersten Abschnitt 110 korrespondierenden Innengewinde aufweisen, das ebenfalls aus Gründen der Übersichtlichkeit nicht gezeigt ist.

Der Rotor 100 und der Stator 200 werden dabei gemeinsam in einem Zustand, wie er in Fig. 4 gezeigt ist, d.h. in dem Zustand, in welchem der Rotor 100 formschlüssig und/oder kraftschlüssig an dem Stator 200 angeordnet ist, an den Motor 500 bzw. das Motorblatt 510 herangeführt und der erste Abschnitt 110 und der zweite Abschnitt 120 in die dazugehörigen Ausnehmung 530 der Motorwelle 520 eingeführt, insbesondere so weit, dass der erste Abschnitt 110 und/oder der zweite Abschnitt 120 des Rotors 100 in Kontakt mit dem ersten Abschnitt 531 und/oder dem zweiten Abschnitt 532 der Ausnehmung 530 kommen und eine weitere Einführung des Rotors 100 in die Motorwelle 520 nicht möglich ist.

Insbesondere stoßen die Außenwände, wie beispielsweise die Stirnseite 102, des Rotors 100 gegen Innenwände der Ausnehmung 530 der Motorwelle 520. Dies kann insbesondere auch durch eingreifen des Innengewindes an der Innenseite des ersten Abschnitts 531 der Ausnehmung 530 mit dem Außengewinde am ersten Abschnitt 110 des Rotors erfolgen. Hierzu kann der sich im Eingriff mit dem Rotor befindliche Stator als Ganzes gedreht oder alternativ unter Verwendung eines geeigneten Werkzeugs in Verbindung mit der Werkzeugaufnahme 165 eingeschraubt werden und so die beiden vorgenannten Gewinde miteinander verschraubt werden. Somit wird ein besonders sicherer Eingriff des Rotors 100 mit der Motorwelle 520 gewährleistet.

In diesem Zustand ist der vierte Abschnitt 140 des Rotors 100 vollständig in der Ausnehmung 225 des Stators 200 aufgenommen und wird insbesondere durch Magnetkraft und/oder Form- bzw. Kraftschluss daran gehalten. Dabei sind die einzelnen Elemente und insbesondere die Länge des Rotors 100, weiter insbesondere die Länge des ersten, zweiten, dritten und/oder vierten Abschnitts, und weiter insbesondere die Länge bzw. Dicke des Stators 200 bzw. dessen Stirnwand 220 so dimensioniert und zueinander angeordnet, dass in dieser Positionsanordnung des Rotors 100 zu dem Stator 200 die Stirnwand 200 nicht das Motorblatt 510 berühren kann, ohne dass sich eine Position des Rotors 100 in Bezug auf den Stator 200 verändert.

Wenn nun aus dieser Position startend der Stator 200 in Richtung des Motors 500 bzw. des Motorblatts 510 in axialer Richtung A vorbewegt wird, löst sich durch den Anschlag des ersten und/oder zweiten Abschnitts des Rotors 100 an dem Motor 500, insbesondere an der Ausnehmung 530 der Motorwelle 520 der Eingriff des vierten Abschnitts 140 in der Ausnehmung 225 der Stirnwand und der Rotor 100 verschiebt sich als Ganzes entgegen der axialen Richtung A weiter in den Hohlraum 230 des Stators 200.

Durch die zwischen dem Rotor 100 und dem Stator 200 wirkende Magnetkraft wird eine Bewegung des Stators 200 in axialer Richtung A bzw. eine Bewegung des Rotors 100 in entgegengesetzter axialer Richtung A erschwert und muss überwunden werden. Dies kann entweder durch reine Muskelkraft erfolgen oder insbesondere mit Hilfe von einem oder mehreren Befestigungsmittel, von denen in Fig. 5 beispielhaft ein erstes Befestigungsmittel 333 und ein zweites Befestigungsmittel 334 mit einem Bezugszeichen versehen sind.

Dazu können die Befestigungsmittel 333 und 334, die beispielsweise als Schrauben ausgebildet sein können, durch an dem Verschlussdeckel 300 vorgesehene Befestigungsdurchführungen 331 und 332 und weiter durch die zuvor beschriebenen Befestigungsdurchführungen 221 und 222 an dem Stator in an dem Motor 500 vorgesehene Befestigungsmittelaufnahmen 511 und 512 geführt und darin befestigt werden. Dazu weisen die Befestigungsmittelaufnahmen 511 und 512 beispielsweise eine Innengewinde auf, das zu einem Außengewinde der Befestigungsmittel 333 und 334 korrespondierend ausgebildet ist.

Durch das Einführen und Befestigen der Befestigungsmittel 333 und 334 in den Befestigungsmittelaufnahmen 511 und 512 wird der Stator 200 sukzessive näher an den Motor 500 herangeführt und unterstützt so ein Überwinden der zwischen dem Rotor 100 und dem Stator 200 wirkende Magnetkraft, sodass der Rotor 100 aus dem Eingriff mit dem Stator 200 gelöst wird. Insbesondere sind die einzelnen Elemente, insbesondere die Befestigungsmittel 333 und 334, die Befestigungsmitteldurchführungen 331 und 332 sowie 221 und 222, die Befestigungsmittelaufnahmen 511 und 512, die Ausnehmung 530 in der Motorwelle 520 und/oder der erste, zweite, dritte, vierte und fünfte Abschnitt des Rotors 100 derart dimensioniert, dass der Rotor 100 bei Befestigung der Befestigungsmittel 333, 334 derart entgegen der axialen Richtung A verschoben wird, dass anstelle des vierten Abschnitts 140 der dritte Abschnitt 130 in der Ausnehmung 225 des Stators 200 angeordnet wird und so ein Kraftschluss und/oder Formschluss des Rotors 100 mit dem Stator 200 gelöst wird und sich der Rotor 100 relativ zu dem Stator 200 bewegen, insbesondere um die Rotationsachse 101 drehen kann.

Dies wird insbesondere dadurch begünstigt, das der Rotor gegenüber dem Stator nicht gelagert ist. Insbesondere weisen der Rotor und der Stator außer dem Befestigungsabschnitt und der dazu korrespondierenden Ausnehmung, sowie der unterstützenden Magnetkraft, keine weiteren Befestigungspunkte oder -mittel auf, sodass in einem vollständig hergestellten Positionsbestimmungssystem der Rotor berührungslos gegenüber dem Stator angeordnet ist und dennoch eine Positions- und insbesondere Rotationspositionsmessung erfolgen kann.

Dadurch, dass der dritte Abschnitt 130 einen abschnittsweise gleich großen Durchmesser in radialer Richtung R aufweist und darüber hinaus kreisförmig ausgebildet ist, wird dennoch ein sicher Lauf und einer Rotation, insbesondere ohne axialer Verschiebungen ermöglicht bzw. sichergestellt.

Das in Fig. 5 gezeigte Positionsbestimmungssystem 1 entspricht dabei dem im Zusammenhang mit Fig. 7 beschriebenen Zustand nach dem Verfahrensschritt 1050. Der Zustand bzw. die Position, in der sich der Rotor 100 zu dem Stator 200 befindet, kann auch als Betriebszustand bzw. Betriebsposition bezeichnet werden und das Positionsbestimmungssystem ist somit betriebsbereit.

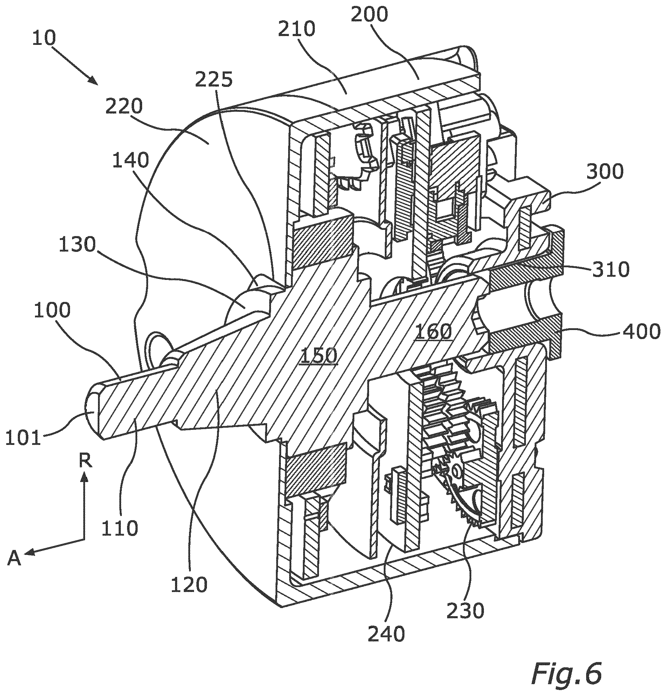

Fig. 6 zeigt eine perspektivische Schnittansicht einer Ausführungsform einer Positionsbestimmungsvorrichtung 10. Dabei entspricht diese in Fig. 6 gezeigte Ausführungsform im Wesentlichen der in Fig. 4 gezeigten Ausführungsform, wobei zusätzlich noch eine Endbefestigung 400 angeordnet bzw. vorgesehen ist. Es versteh sich, dass diese gleichermaßen in dem in Fig. 5 gezeigten Positionsbestimmungssystem vorgesehen sein kann.

Die Endbefestigung 400 ist dabei exemplarisch als Kappe 400 ausgebildet, die in die zuvor beschriebene Aufnahme 310 des Verschlussdeckels 300 eingeführt und daran arretiert werden kann, beispielsweise durch ein oder mehrere Rastmechanismen und durch Haftreibung.

Die Endbefestigung die 400 dient dabei insbesondere einen Anschlag in einer Richtung entgegengesetzt zur axialen Richtung A bereitzustellen, wenn der Rotor 100 aus dem Eingriff mit dem Stator 200 gelöst wird und entgegen der axialen Richtung A in dem Gehäuse 210 des Stators 200 verschoben wird. Hierdurch wird der Rotor 100 besonders sicher befestigt.

Darüber hinaus kann die Endbefestigung 400 auch dazu dienen, den Hohlraum des Stators und insbesondere die darin befindliche Auswertungseinheit mit elektronischen Bauelementen vor Umwelteinflüssen wie Staub oder Wasser zu schützen.

Die Endbefestigung 400 kann insbesondere lösbar in der Aufnahme 310 befestigt werden, um einen Zugriff auf die Werkzeugaufnahme 165 freizugeben und so eine spätere Demontage des Rotors 100 zu ermöglichen.

Fig. 7 zeigt ein Ablaufdiagramm einer Ausführungsform eines Verfahrens 1000 zur Herstellung einer Positionsbestimmungsvorrichtung und eines Positionsbestimmungssystems.

Das Verfahren 1000 beginnt in einem ersten Schritt 1010, in dem ein Rotor bereitgestellt wird, insbesondere ein Rotor wie im Zusammenhang mit Fig. 1 gezeigt.

In einem weiteren Schritt 1020 wird ein Stator bereitgestellt, insbesondere ein Stator wie im Zusammenhang mit Fig. 2 gezeigt.

In einem darauffolgenden Schritt 1030 wird der Rotor 100 in einen Hohlraum des Stators 200 eingeführt, sodass ein Befestigungsabschnitt des Rotors in der Ausnehmung des Stators aufgenommen wird und damit eingreift. Hierdurch wird ein Kraft und/oder Formschluss zwischen dem Stator und dem Rotor hergestellt.

Nach diesem Schritt 1030 ist die Positionsbestimmungsvorrichtung wie in Fig. 3 gezeigt hergestellt.

Optional kann in einem nicht gezeigten Schritt nach dem Schritt 1030 noch ein Auswertungseinrichtung in dem Hohlraum in Einführungsrichtung des Stators hinter dem Stator angeordnet werden.

Ebenso optional kann in einem nicht gezeigten Schritt danach noch ein Verschlussdeckel an der zu der Ausnehmung gegenüberliegenden Seite des Stators angeordnet werden, wie ebenfalls in Fig. 3 gezeigt.

Weiter optional kann in einem ebenso nicht gezeigten Schritt danach eine Endbefestigung an dem Verschlussdeckel angeordnet werden.

In einem darauffolgenden Schritt 1040 wird ein Motor bereitgestellt.

In einem weiteren Schritt 1050 wird die Positionsbestimmungsvorrichtung an dem Motor derart angeordnet, dass der Befestigungsabschnitt des Rotors aus der Ausnehmung des Stators gelöst wird. Hierdurch wird der Eingriff und insbesondere der Kraft- und/oder Formschluss zwischen dem Rotor und dem Stator wieder gelöst

Nach diesem Schritt 1050 ist das Positionsbestimmungssystem wie in Fig. 5 gezeigt hergestellt.

Optional können in einem weiteren, nicht gezeigten Schritt nach oder zusammen mit dem Schritt 1050 noch Befestigungsmittel zwischen dem Stator und dem Motor angeordnet und befestigt werden, wodurch das Lösen des Eingriffs aus Schritt 1050 unterstützt wird.

Auch dies ist in Fig. 5 gezeigt.

Ebenso optional und alternativ zu oben kann in einem nicht gezeigten Schritt danach auch alternativ die Endbefestigung an dem Verschlussdeckel angeordnet werden.

Zur Demontage können die Schritte im Wesentlichen in entgegengesetzter Reihenfolge ausgeführt werden.

### Bezugszeichenliste

- 1: Positionsbestimmungssystem
- 10: Positionsbestimmungsvorrichtung
- 100: Rotor
- 101: Rotationsachse
- 102: Stirnseite
- 103: Anfasung
- 110: erster Abschnitt; Gewindeabschnitt
- 120: zweiter Abschnitt; Zentrierungsabschnitt
- 121: Anfasung
- 130: dritter Abschnitt
- 140: vierter Abschnitt; Befestigungsabschnitt
- 150: fünfter Abschnitt; Maßverkörperungsabschnitt
- 151: Segment
- 152: Segment
- 160: sechster Abschnitt
- 165: Werkzeugaufnahme
- 200: Stator
- 210: Gehäuse
- 220: Stirnwand
- 221: Befestigungsmitteldurchführung
- 222: Befestigungsmitteldurchführung
- 225: Ausnehmung
- 230: Hohlraum
- 240: Platine
- 300: Verschlussdeckel
- 310: Aufnahme
- 331: Befestigungsmitteldurchführung
- 332: Befestigungsmitteldurchführung
- 333: Befestigungsmittel
- 334: Befestigungsmittel
- 400: Endbefestigung
- 500: Motor
- 510: Motorblatt
- 511: Befestigungsmittelaufnahme
- 512: Befestigungsmittelaufnahme
- 520: Motorwelle
- 530: Ausnehmung
- 531: erster Abschnitt
- 532: zweiter Abschnitt
- 1000: Verfahren
- 1010: Verfahrensschritt
- 1020: Verfahrensschritt
- 1030: Verfahrensschritt
- 1040: Verfahrensschritt
- 1050: Verfahrensschritt

## Patentansprüche

1. Positionsbestimmungsvorrichtung (10), umfassend:
- einen Rotor (100), der einen Maßverkörperungsabschnitt (150) aufweist, der magnetisch ausgebildet ist, wobei der Maßverkörperungsabschnitt (150) eine Maßverkörperung ausbildet, die ausgebildet ist, von einer Auswertungseinrichtung erfasst zu werden, um eine Rotationposition des Rotors (100) um eine Rotationsachse in Bezug zu einem Stator (200) zu ermitteln; und
- einen Stator (200), der ein Gehäuse (210) aufweist, das einen Hohlraum (230) ausbildet in dem der Rotor (100) zumindest teilweise aufgenommen ist, wobei der Stator (200) zumindest abschnittsweise aus einem ferromagnetischen Material ausgebildet ist;
- wobei der Rotor (100) und der Stator (200) derart zueinander angeordnet sind und zusammenzuwirken, dass durch Magnetkraft eine Verschiebung des Rotors (100) zu dem Stator (200) in axialer Richtung (A) der Rotationsachse begünstigt und in entgegengesetzter axialer Richtung (A) erschwert wird;
**dadurch gekennzeichnet, dass**
- der Rotor (100) einen Befestigungsabschnitt (140) aufweist und der Stator (200) eine Ausnehmung (225) aufweist und wobei der Befestigungsabschnitt (140) die Ausnehmung (225) eine zueinander korrespondierende Form aufweisen; und
- der Befestigungsabschnitt (140) ausgebildet ist, mit der Ausnehmung (225) einen Formschluss zu erzeugen.

2. Positionsbestimmungsvorrichtung (10) nach Anspruch 1, wobei der Rotor (100), insbesondere in einem Transportzustand, an einer Fläche des Stators (200) anliegt, wobei der Rotor (100) durch die Magnetkraft an die Fläche des Stators (200) gedrückt wird, um ein Drehen des Stators (100) relativ zum Rotor (200) zu erschweren.

3. Positionsbestimmungsvorrichtung (10) nach Anspruch 2, wobei der Rotor (100), zum Überführen der Positionsbestimmungsvorrichtung (10) in einen Betriebszustand, entgegen der Magnetkraft von der Fläche des Stators (200) wegbewegbar ausgebildet ist, wodurch ein Drehen des Stators (100) relativ zum Rotor (200) ermöglicht wird.

4. Positionsbestimmungsvorrichtung (10) nach einem der vorhergehenden Ansprüche, wobei eine Verschiebung des Rotors (100) in Bezug auf den Stator (200) in axialer Richtung begünstigt und in entgegengesetzter Richtung erschwert wird, wenn der Befestigungsabschnitt (140) des Rotors (100) in der Ausnehmung (225) des Stators (200) aufgenommen ist.

5. Positionsbestimmungsvorrichtung (10) nach einem der vorhergehenden Ansprüche, wobei eine Rotation des Rotors (100) um die Rotationsachse verhindert wird, wenn der Befestigungsabschnitt (140) des Rotors (100) in der Ausnehmung (225) des Stators (200) aufgenommen ist.

6. Positionsbestimmungsvorrichtung (10) nach einem der vorhergehenden Ansprüche, wobei der Befestigungsabschnitt (140) einen in radialer Richtung (R) polygonförmigen Querschnitt aufweist.

7. Positionsbestimmungsvorrichtung (10) nach einem der vorhergehenden Ansprüche, wobei der Befestigungsabschnitt (140) in radialer Richtung (R) einen kleineren Durchmesser als der Maßverkörperungsabschnitt (150) aufweist.

8. Positionsbestimmungsvorrichtung (10) nach einem der vorhergehenden Ansprüche, wobei der Rotor (100) derart zu dem Stator (200) angeordnet und ausgebildet ist, dass bei einem Befestigen der Positionsbestimmungsvorrichtung (10) an einem Motor (500) die Magnetkraft überwunden wird.

9. Positionsbestimmungsvorrichtung (10) nach Anspruch 8, wobei der Rotor (100) derart zu dem Stator (200) angeordnet und ausgebildet ist, dass durch Überwinden der Magnetkraft der Befestigungsabschnitt (140) aus der Ausnehmung (225) gelöst wird.

10. Positionsbestimmungsvorrichtung (10) nach Anspruch 9, wobei der Rotor (100) derart zu dem Stator (200) angeordnet und ausgebildet ist, dass durch Lösen des Befestigungsabschnitts (140) aus der Ausnehmung (225) eine Rotation des Rotors (100) um die Rotationsachse ermöglicht wird.

11. Positionsbestimmungssystem (1), umfassend:
- eine Positionsbestimmungsvorrichtung (10) nach einem der Ansprüche 1 bis 10; und
- einen Motor (500).

12. Verfahren zur Herstellung einer Positionsbestimmungsvorrichtung (10)nach einem der Ansprüche 1 bis 10, umfassend die Schritte:
- Bereitstellen (1010) eines Rotors (100), der einen Maßverkörperungsabschnitt (150) aufweist, der magnetisch ausgebildet ist; und
- Bereitstellen (1020) eines Stators (200), der ein Gehäuse (210) aufweist, das einen Hohlraum (230) ausbildet, wobei der Stator (200) zumindest abschnittsweise aus einem ferromagnetischen Material ausgebildet ist; und
- Einführen (1030) des Rotors (100) in den Hohlraum (230) des Stators (200) sodass der Rotor (100) und der Stator (200) derart zusammenzuwirken, dass durch Magnetkraft eine Verschiebung des Rotors (100) zu dem Stator (200) in axialer Richtung (A) der Rotationsachse begünstigt und in entgegengesetzter axialer Richtung (A) erschwert wird;
**dadurch gekennzeichnet, dass**
- der Rotor (100) einen Befestigungsabschnitt (140) aufweist und der Stator (200) eine Ausnehmung (225) aufweist und wobei der Befestigungsabschnitt (140) die Ausnehmung (225) eine zueinander korrespondierende Form aufweisen; und
- der Befestigungsabschnitt (140) ausgebildet ist, mit der Ausnehmung (225) einen Formschluss zu erzeugen.

13. Verfahren zur Herstellung eines Positionsbestimmungssystems (1) nach Anspruch 11, umfassend die Schritte:
- Bereitstellen einer Positionsbestimmungsvorrichtung (10), insbesondere einer Positionsbestimmungsvorrichtung (10) nach einem der Ansprüche 1 bis 10, die durch ein Verfahren zur Herstellung einer Positionsbestimmungsvorrichtung (10) nach Anspruch 12 hergestellt wurde;
- Bereitstellen eines Motors (500);
- Anordnen der Positionsbestimmungsvorrichtung (10) an dem Motor (500), sodass die Magnetkraft überwunden wird.

## Claims

1. A position-determining device (10) comprising:
- a rotor (100) which has a material measure section (150) that is magnetically configured, wherein the material measure section (150) forms a material measure which is configured to be detected by an evaluation device in order to determine a rotational position of the rotor (100) about an axis of rotation with respect to a stator (200); and
- a stator (200) which has a housing (210) that forms a cavity (230) in which the rotor (100) is at least partially received, wherein the stator (200) is formed at least in sections from a ferromagnetic material;
- wherein the rotor (100) and the stator (200) are arranged relative to one another and cooperate such that a displacement of the rotor (100) toward the stator (200) in the axial direction (A) of the axis of rotation is facilitated by magnetic force and a displacement in the opposite axial direction (A) is impeded by magnetic force,
**characterized in that**
- the rotor (100) has a fastening section (140) and the stator (200) has a recess (225), and with the fastening section (140) and the recess (225) having mutually corresponding shapes; and
- the fastening section (140) is configured to produce a form fit with the recess (225).

2. A position-determining device (10) according to claim 1, wherein the rotor (100), in particular in a transport state, rests against a surface of the stator (200), wherein the rotor (100) is pressed against the surface of the stator (200) by the magnetic force to impede a rotation of the stator (200) relative to the rotor (100).

3. A position-determining device (10) according to claim 2, wherein the rotor (100) is configured to be movable away from the surface of the stator (200) against the magnetic force in order to transition the position-determining device (10) into an operating state, whereby a rotation of the stator (200) relative to the rotor (100) is enabled.

4. A position-determining device (10) according to any one of the preceding claims, wherein a displacement of the rotor (100) with respect to the stator (200) in the axial direction is facilitated and a displacement in the opposite direction is impeded when the fastening section (140) of the rotor (100) is received in the recess (225) of the stator (200).

5. A position-determining device (10) according to any one of the preceding claims, wherein a rotation of the rotor (100) about the axis of rotation is prevented when the fastening section (140) of the rotor (100) is received in the recess (225) of the stator (200).

6. A position-determining device (10) according to any one of the preceding claims, wherein the fastening section (140) has a cross-section which is polygonal in the radial direction (R).

7. A position-determining device (10) according to any one of the preceding claims, wherein the fastening section (140) has a smaller diameter in the radial direction (R) than the material measure section (150).

8. A position-determining device (10) according to any one of the preceding claims, wherein the rotor (100) is arranged and configured relative to the stator (200) such that the magnetic force is overcome when mounting the position-determining device (10) at a motor (500).

9. A position-determining device (10) according to claim 8, wherein the rotor (100) is arranged and configured relative to the stator (200) such that the fastening section (140) is released from the recess (225) by overcoming the magnetic force.

10. A position-determining device (10) according to claim 9, wherein the rotor (100) is arranged and configured relative to the stator (200) such that a rotation of the rotor (100) about the axis of rotation is enabled by releasing the fastening section (140) from the recess (225).

11. A position-determining system (1) comprising:
- a position-determining device (10) according to any one of the claims 1 to 10; and
- a motor (500).

12. A method for manufacturing a position-determining device (10) according to any one of the claims 1 to 10, comprising the steps of:
- providing (1010) a rotor (100) which has a material measure section (150) that is magnetically configured; and
- providing (1020) a stator (200) which has a housing (210) that forms a cavity (230), wherein the stator (200) is formed at least in sections from a ferromagnetic material; and
- inserting (1030) the rotor (100) into the cavity (230) of the stator (200) so that the rotor (100) and the stator (200) cooperate such that a displacement of the rotor (100) toward the stator (200) in the axial direction (A) of the axis of rotation is facilitated by magnetic force and a displacement in the opposite axial direction (A) is impeded by magnetic force,
**characterized in that**
- the rotor (100) has a fastening section (140) and the stator (200) has a recess (225), and with the fastening section (140) and the recess (225) having mutually corresponding shapes; and
- the fastening section (140) is configured to produce a form fit with the recess (225).

13. A method for manufacturing a position-determining system (1) according to claim 11, comprising the steps of:
- providing a position-determining device (10), in particular a position-determining device (10) according to any one of the claims 1 to 10, which was manufactured by a method for manufacturing a position-determining device (10) according to claim 12;
- providing a motor (500);
- arranging the position-determining device (10) at the motor (500) so that the magnetic force is overcome.

## Revendications

1. Dispositif de détermination de position (10), comprenant :
- un rotor (100) comportant une partie de mesure matérialisée (150) de configuration magnétique, ladite partie de mesure matérialisée (150) formant une mesure matérialisée conçue pour être détectée par un dispositif d'évaluation afin de déterminer une position de rotation du rotor (100) autour d'un axe de rotation par rapport à un stator (200) ; et
- un stator (200) comportant un boîtier (210) formant une cavité (230) dans laquelle le rotor (100) est au moins partiellement logé, le stator (200) étant conçu, au moins par sections, en un matériau ferromagnétique ;
- le rotor (100) et le stator (200) étant disposés l'un par rapport à l'autre et coopérant de telle sorte que la force magnétique favorise un déplacement du rotor (100) vers le stator (200) dans la direction axiale (A) de l'axe de rotation et l'entrave dans la direction axiale opposée (A) ;
**caractérisé en ce que**
- le rotor (100) comporte une partie de fixation (140) et le stator (200) comporte un évidement (225), la partie de fixation (140) et l'évidement (225) présentant une forme correspondant l'une à l'autre ; et
- la partie de fixation (140) est conçue pour former une liaison par complémentarité de forme avec l'évidement (225).

2. Dispositif de détermination de position (10) selon la revendication 1, dans lequel le rotor (100), en particulier dans un état de transport, repose contre une surface du stator (200), le rotor (100) étant pressé contre la surface du stator (200) par la force magnétique afin d'entraver la rotation du stator (200) par rapport au rotor (100).

3. Dispositif de détermination de position (10) selon la revendication 2, dans lequel le rotor (100), pour faire passer le dispositif de détermination de position (10) dans un état de fonctionnement, est conçu pour s'éloigner de la surface du stator (200) à l'encontre de la force magnétique, ce qui permet une rotation du stator (200) par rapport au rotor (100).

4. Dispositif de détermination de position (10) selon l'une des revendications précédentes, dans lequel un déplacement du rotor (100) par rapport au stator (200) est favorisé dans la direction axiale et entravé dans la direction opposée lorsque la partie de fixation (140) du rotor (100) est logée dans l'évidement (225) du stator (200).

5. Dispositif de détermination de position (10) selon l'une des revendications précédentes, dans lequel une rotation du rotor (100) autour de l'axe de rotation est empêchée lorsque la partie de fixation (140) du rotor (100) est logée dans l'évidement (225) du stator (200).

6. Dispositif de détermination de position (10) selon l'une des revendications précédentes, dans lequel la partie de fixation (140) comporte une section transversale de forme polygonale dans la direction radiale (R).

7. Dispositif de détermination de position (10) selon l'une des revendications précédentes, dans lequel la partie de fixation (140) comporte, dans la direction radiale (R), un diamètre inférieur à celui de la partie de mesure matérialisée (150).

8. Dispositif de détermination de position (10) selon l'une des revendications précédentes, dans lequel le rotor (100) est disposé et conçu par rapport au stator (200) de telle sorte que, lors de la fixation du dispositif de détermination de position (10) sur un moteur (500), la force magnétique soit surmontée.

9. Dispositif de détermination de position (10) selon la revendication 8, dans lequel le rotor (100) est disposé et conçu par rapport au stator (200) de telle sorte que, en surmontant la force magnétique, la partie de fixation (140) est dégagée de l'évidement (225).

10. Dispositif de détermination de position (10) selon la revendication 9, dans lequel le rotor (100) est disposé et conçu par rapport au stator (200) de telle sorte que le dégagement de la partie de fixation (140) de l'évidement (225) permette une rotation du rotor (100) autour de l'axe de rotation.

11. Système de détermination de position (1) comprenant :
- un dispositif de détermination de position (10) selon l'une des revendications 1 à 10 ; et
- un moteur (500).

12. Procédé de fabrication d'un dispositif de détermination de position (10) selon l'une des revendications 1 à 10, comprenant les étapes suivantes :
- fournir (1010) un rotor (100) comportant une partie de mesure matérialisée (150) qui est de configuration magnétique ; et
- fournir (1020) un stator (200) comportant un boîtier (210) formant une cavité (230), le stator (200) étant constitué, au moins par sections, d'un matériau ferromagnétique ; et
- insérer (1030) le rotor (100) dans la cavité (230) du stator (200) de telle sorte que le rotor (100) et le stator (200) coopèrent de manière à ce que, par la force magnétique, un déplacement du rotor (100) vers le stator (200) soit favorisé dans la direction axiale (A) de l'axe de rotation et soit entravé dans la direction axiale opposée (A) ;
**caractérisé en ce que**
- le rotor (100) comporte une partie de fixation (140) et le stator (200) comporte un évidement (225), la partie de fixation (140) et l'évidement (225) présentant une forme correspondant l'une à l'autre ; et
- la partie de fixation (140) est conçue pour former une liaison par complémentarité de forme avec l'évidement (225).

13. Procédé de fabrication d'un système de détermination de position (1) selon la revendication 11, comprenant les étapes suivantes :
- fournir un dispositif de détermination de position (10), en particulier un dispositif de détermination de position (10) selon l'une des revendications 1 à 10, qui a été fabriqué selon un procédé de fabrication d'un dispositif de détermination de position (10) selon la revendication 12 ;
- fournir un moteur (500) ;
- disposer le dispositif de détermination de position (10) sur le moteur (500) de manière à surmonter la force magnétique.
